## Europäisches Patentamt
## European Patent Office
## Office européen des brevets

(19)

(11) Veröffentlichungsnummer: **0 287 502**
**A1**

(12)

# EUROPÄISCHE PATENTANMELDUNG

(21) Anmeldenummer: **88730062.2**

(22) Anmeldetag: **14.03.88**

(51) Int. Cl.⁴: **G 01 B 5/16**

(30) Priorität: **17.03.87 DE 3708858**

(43) Veröffentlichungstag der Anmeldung:
**19.10.88 Patentblatt 88/42**

(84) Benannte Vertragsstaaten: **CH DE FR GB LI**

(71) Anmelder: **Rissmann, Horst-Günther**
**Tempelhofer Damm 58**
**D-1000 Berlin 42 (DE)**

(72) Erfinder: **Rissmann, Horst-Günther**
**Tempelhofer Damm 58**
**D-1000 Berlin 42 (DE)**

(74) Vertreter: **Meissner, Peter E., Dipl.-Ing. et al**
**Meissner & Meissner Patentanwälte Herbertstrasse 22**
**D-1000 Berlin 33 Grunewald (DE)**

(54) Vorrichtung zum Prüfen und Vermessen von Gewinden.

(57) Die Erfindung betrifft eine Vorrichtung zum Prüfen und Vermessen von Gewinden und von deren rotationssymmetrischem koaxialen Verlauf in einem Spannvorgang, in der ein Gewindelehrring oder -dorn montiert und justiert ist. Um die Prüfung und Vermessung dieser Gewinde zu vereinfachen, wird vorgeschlagen, daß der Gewindelehrring oder -dorn (2) mehrfach segmental geteilt und auf einem Mehrbackenfutter (1) montiert ist. Die Drehachsen sind dabei exakt ausgerichtet. Zusätzlich sind Meßmittel vorgesehen, um bei dieser Ausrichtung Durchmesser, Flächen, Konen, gewinde und Bohrungen vermeß- und prüfbar zu machen.

Abb. 3

EP 0 287 502 A1

Bundesdruckerei Berlin

**Beschreibung**

## Vorrichtung zum Prüfen und Vermessen von Gewinden

Die Innen- und Außenvermessung von Gewinden in Drehteilen erfolgt gewöhnlich mit Gewindelehren in Ring- oder Dornform, wobei hauptsächlich auf die "Gewindegängigkeit" des in Serienfertigung hergestellten Drehteiles Wert gelegt wird.

Um das "Gutmaß", d.h. noch zulässige Größt- und Kleinstmaß zu bestimmen, muß jeweils mit zwei Grenzlehren gearbeitet bzw. geprüft werden, oder über sogenannte Gewindegrenzrollen- und Gewindegrenzrechenlehren.

Es ist auch bekannt, daß andere Durchmesser, Planflächen, Konen, Gewinde, Bohrungen usw. am selben Drehteil über konische Gewindeaufnahmen (am zu messenden Gewinde angesetzt) mitgeprüft werden, allerdings mit relativ hoher Ungenauigkeit, da hierbei Verkantungen des Drehteils auftreten können.

Will man Einzelparameter von Gewinden an Drehteilen ermitteln, wie Kern-, Flanken- und Außendurchmesser, wird dies getrennt über Zwei- oder Mehrpunktmessung durchgeführt, oder das gesamte Gewindeprofil wird mit einer gezeichneten Vorlage vergrößert im "Profilprojektor" verglichen.

Es sind aber auch aufwendige "Gewindemeßmaschinen" bekannt geworden, die über Meßtaster (mechanisch, optisch, induktiv usw.) und entsprechende Anzeigeinstrumente (z.B. Meßuhren) im Einzelvorgang den Flanken-, Außen- und Kerndurchmesser des Gewindes messen.

Während in den beiden letzten Fällen der maschinelle Aufwand und die vorbereitenden Einrichtezeiten sehr hoch sind und eine Prüfung des Gewindes auf "Gängigkeit" nicht erfolgt, treten bei der Geweinde mit Lehrringen und -dornen sehr hohe manuelle Arbeitsanteile bei der Kontrolle von Drehteilen mit Gewinden auf, ohne andere Einzelparameter zu erfassen.

Kompliziert wird die Meßmethode zusätzlich und bisher auf mehrere Prüfplätze verteilt, wenn neben der Gewindemessung an sich, der rotationssymmetrische koaxiale Verlauf und die Planlage des gemessenen Gewindes zu anderen Durchmessern, Flächen, Konen, Gewinden und Bohrungen desselben Werkstückes gleichzeitig mitermittelt werden soll, - eine Forderung, die von der weiterverarbeitenden Industrie an Präzisionsteile immer mehr gestellt wird.

Die Vereinfachung der Gewindemessung und die Rationalisierung im Sinne von Arbeitszeiteinsparung unter gleichzeitiger Erhöhung der Präzision an serienmäßig hergestellten Drehteilen mit anderen Bezugsflächen, Bohrungen, Konen, Gewinden usw. ist daher anzustreben.

Die Erfindung hat sich zur Aufgabe gestellt, durch Verwendung eines segmental mehrfach geteilten, über ein präzises Mehrbackenspannfutter verstellbaren Gewindelehrringes oder -dornes, in einer einzigen Vorrichtung und in einem einzigen Spannvorgang, sowohl die Gewindemessung selbst auf ihre Gängigkeit unter Berücksichtigung der zulässigen "Plus- und Minustoleranzen", als auch gleichzeitig den präzisen Verlauf des gemessenen Gewindes zu anderen Durchmessern, Flächen, Konen, Gewinden und Bohrungen des jeweiligen Werkstückes zu ermitteln.

Darüber hinaus wird eine weitere kostensparende automatische Bestückung der Meßvorrichtung möglich gemacht, die das Meßergebnis von Zufällen und Unzulänglichkeiten wie bspw. Ermüdung, Unaufmerksamkeit usw. der Prüfperson weitgehend unabhängig macht.

Das Meßergebnis kann außerdem durch die erfindungsgemäße Anordnung über an sich bekannte elektro-elektronische Abtast- und Meßverfahren direkt digital angezeigt oder gespeichert und auf Abruf dokumentiert zum "Ausdruck" kommen.

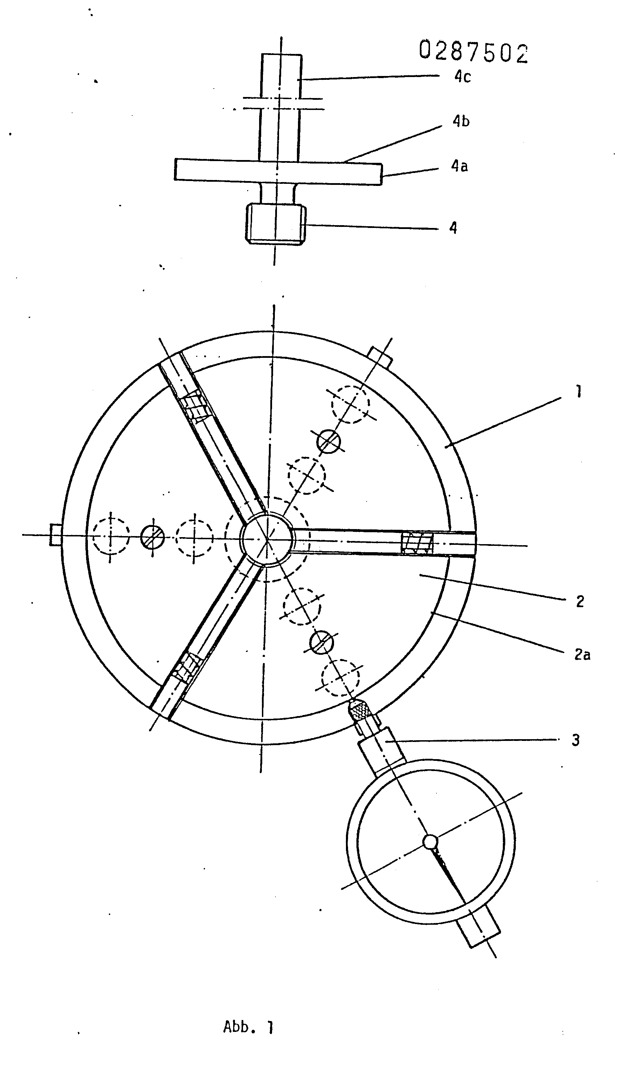

In den Abbildungen 1 bis 10 ist die erfindungsgemäße Vorrichtung im einzelnen dargestellt und sie soll nachfolgend anhand dieser Zeichnungen erläutert werden.

In Eigenheit der Erfindung wird nach Abb. I ein beispielsweise pneumatisch betätigtes Mehrfachspannfutter (1) mit den aus einem Stück hergestellten Segmenten eines Gewindelehrringes (2) bestückt, dessen Gewindeabmessungen vorzugsweise (und auf das zu messende Außengewinde bezogen) im gerade noch zulässigen Größtmaß liegen.

Damit ist gewährleistet, daß bei einer bspw. 3 -120°-Teilung des Gewindelehrringes, an den späteren Gewindeprüflingen selbst, immer eine echte Dreiflächenauflage erfolgt, da die zulässigen Minustoleranzen kleinere Gewindeabmessungen aufweisen als am verwendeten Gewindelehrring.

Es gehört zur selbstverständlichen Voraussetzung, daß die Planflächen und Außendurchmesser sowohl des Spannfutters, wie auch die des verwendeten Gewindelehrringes vorher exakt rechtwinklig bzw. fluchtend zur jeweiligen Drehachse geschliffen sind.

Die Justierung der getrennten Segmente des Gewindelehrringes wird mit Hilfe eines präzisen Gewindehilfsdornes (4) vorgenommen, der seinerseits das zulässige Gewindegrößtmaß aufweist und mit genau fluchtenden Bezugsflächen (4a, 4b, 4c) versehen ist.

Nach der Justierung und entsprechenden Verankerung der nun mit dem Dreibackenfutter zentral beweglichen Gewindesegmente kann nach Entfernung des Gewindehilfsdornes der Gewindeprüfling auf Einhaltung der zulässigen Toleranz geprüft und vermessen werden, indem Abweichungen bspw. mittels mechanischer Abtastung und Meßuhr (3) über die Bezugsfläche (2a) zur Anzeige kommen.

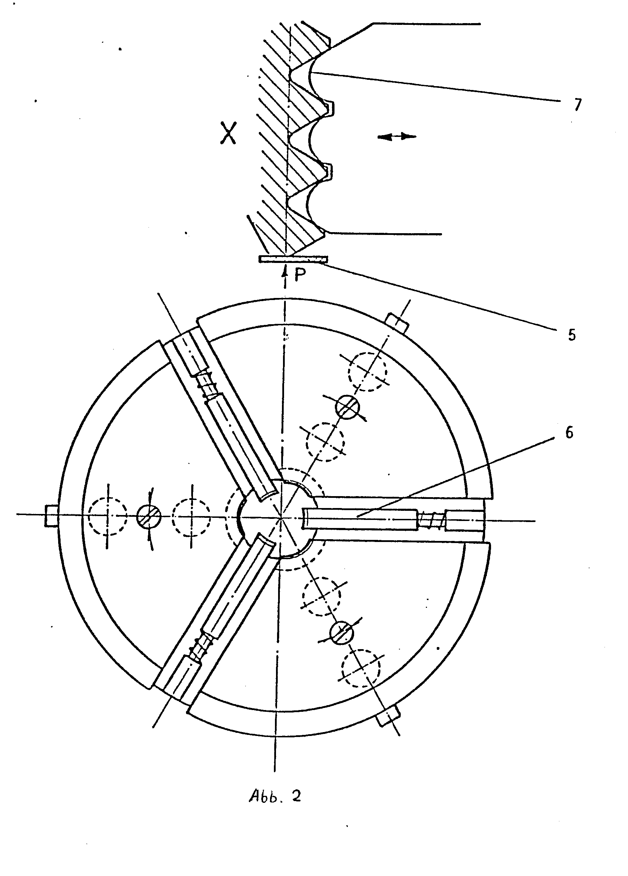

Um beim Einlegen des Prüflings eine Vorpositionierung vorzunehmen, ist nach Abb. 2 ein mit der Kraft P verstellbarer federnder Anschlag (5) vorgesehen, der bei einer Erweiterung der Vorrichtung auf automatische Bestückung gleichzeitig als "Auswerfer" dient.

Die eigentliche Positionierung des Prüflings (um ein Aufeinandertreffen von Gewindespitze auf Gewindespitze zu vermeiden) nehmen erfindungsgemäß die Zentrierelemente (6) vor, die federnd zwischen den Gewindesegmenten angeordnet, mit derselben Gewindesteigung versehen und federnd auf Gewindesollmaß stehend, beim Einlegen und Auswerfen des Prüflings eine "Ratschenwirkung" ausüben, indem die Gewindespitzen (7) der Zentrierelemente abgerundet sind.

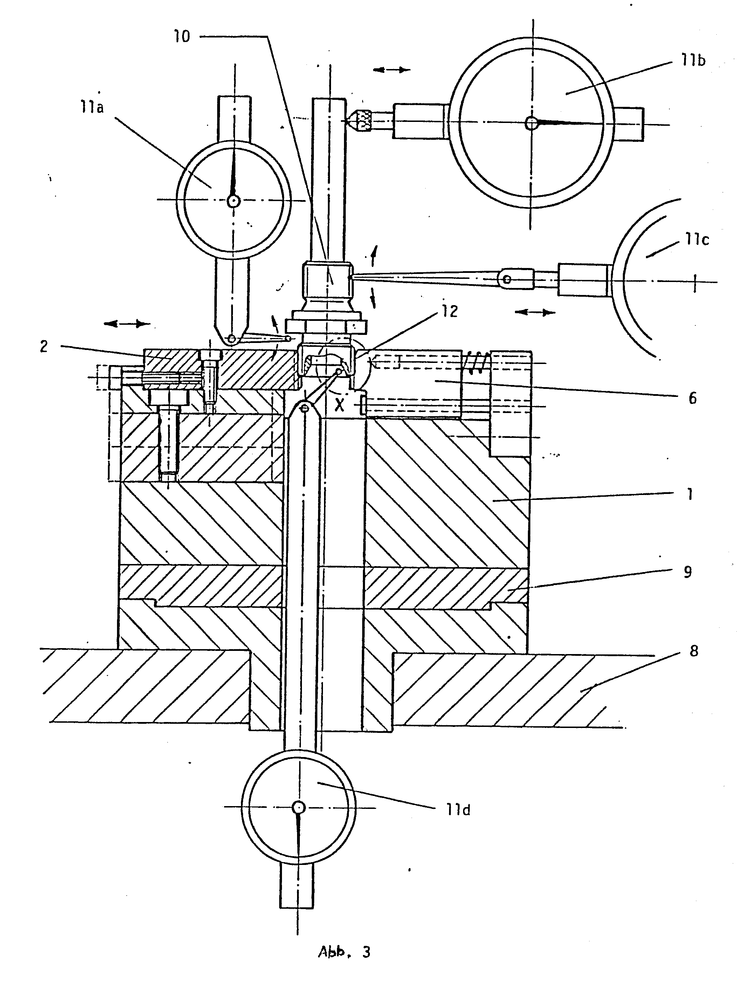

Die Abb. 3 verdeutlicht die Wirkweise der Gesamtvorrichtung im Prinzip.

Auf einer Grundplatte (8) ist über einen Zwischenring (9) das Dreibackenfutter (1) bis zu 360° drehbar angeordnet, das die Gewindesegmente (2) und die Zentrierelemente (6) trägt.

An dem eingespannten Prüfling (10) wird deutlich, daß bspw. über Meßuhren (11a, 11b, 11c, 11d) außer der Gewindemessung an sich (12), alle nur denkbaren anderen Flächenbezüge zum gemessenen Gewinde des Prüflings mitgemessen werden können.

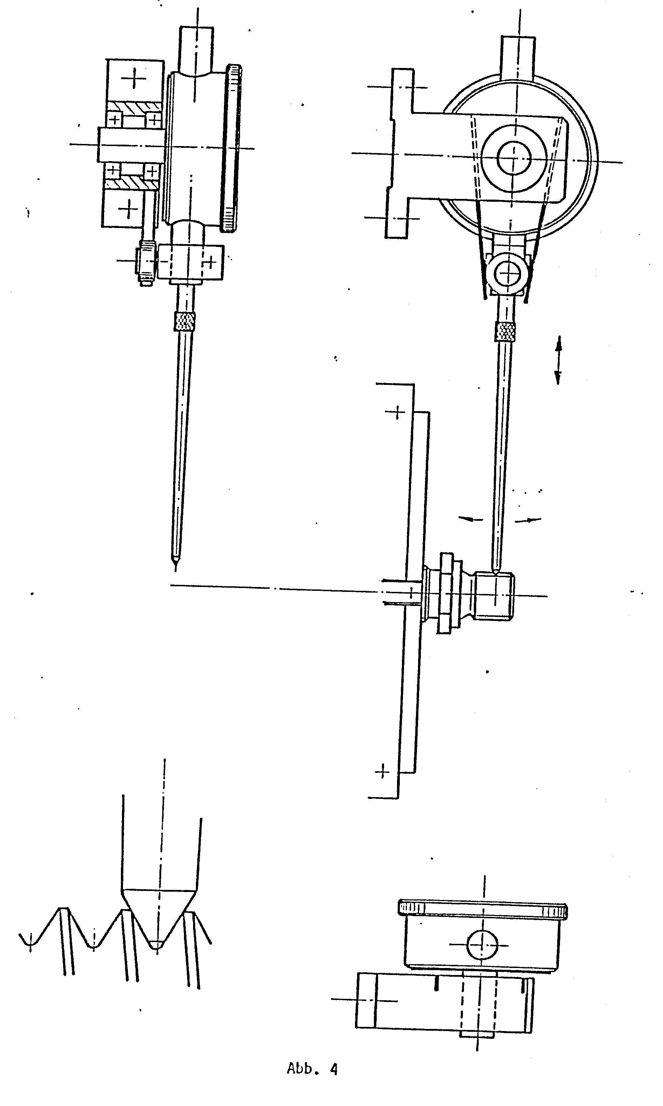

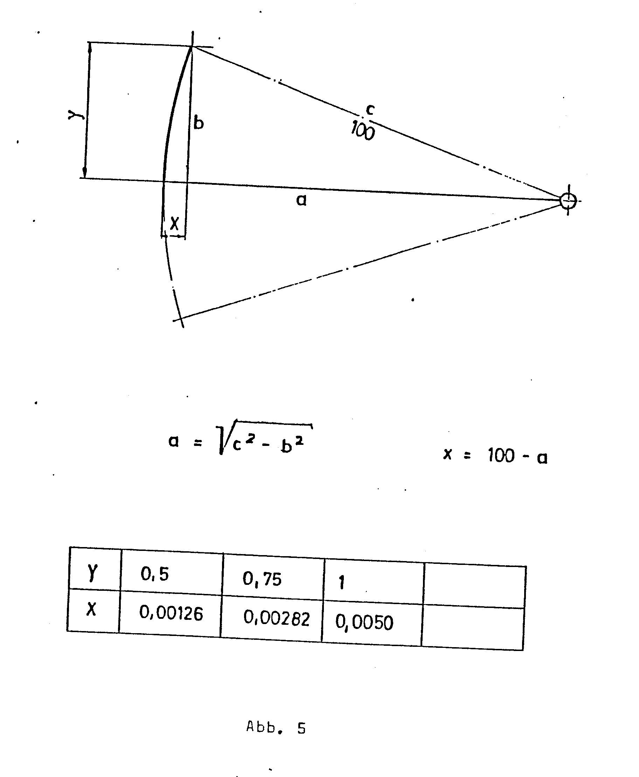

Die Abb. 4 läßt erkennen, daß bei mitlaufenden anderen Gewinden am selben Drehteil auch deren Laufgenauigkeit usw. mitgemessen werden kann. Eine Ableitung dazu nach Abb. 5.

Vor dem Auswerfen des Prüflings und nach der Neubestückung werden ggf. die Meßeinrichtungen auf (nicht mitgezeichneten) Gleitschienen zurückgefahren bzw. wieder in Meßposition gebracht.

Bei einer vollautomatischen Ausführung der Gewindemeßvorrichtung wird das Mehrbackenfutter bspw. über einen Schrittmotor (Dreipunktmessung in einer Ebene) stufenweise gesteuert in einem vorgegebenen Programm, das die Abläufe des Bestückens, Spannens und Entspannens, sowie das Anstellen und Ausfahren der Meßelemente (zur Freimachung des Spannbereiches während der Bestückung) mitregelt und -steuert.

Die Meßwerte selbst können über an sich bekannte moderne Datensysteme gespeichert und dokumentationsgerecht zum Ausdruck gebracht werden.

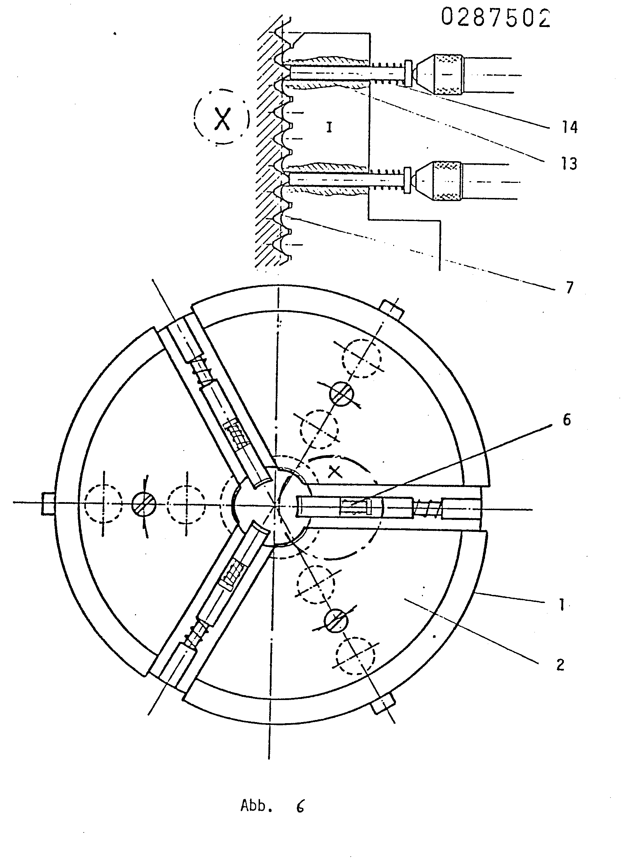

Nachfolgend soll nun die Ausbildung nach den Abb. 6 bis 10 erläutert werden.
Nach Abb. 6 werden die auf Gewindesollmaß stehenden, als "Ratsche" (7) wirkenden, aber sonst mit derselben Gewindesteigung wie das Prüfgewinde ausgestatteten federnden Zentrierelemente (6) mit Bohrungen (13) versehen, in denen ihrerseits federnde Taststifte (14) gelagert sind.

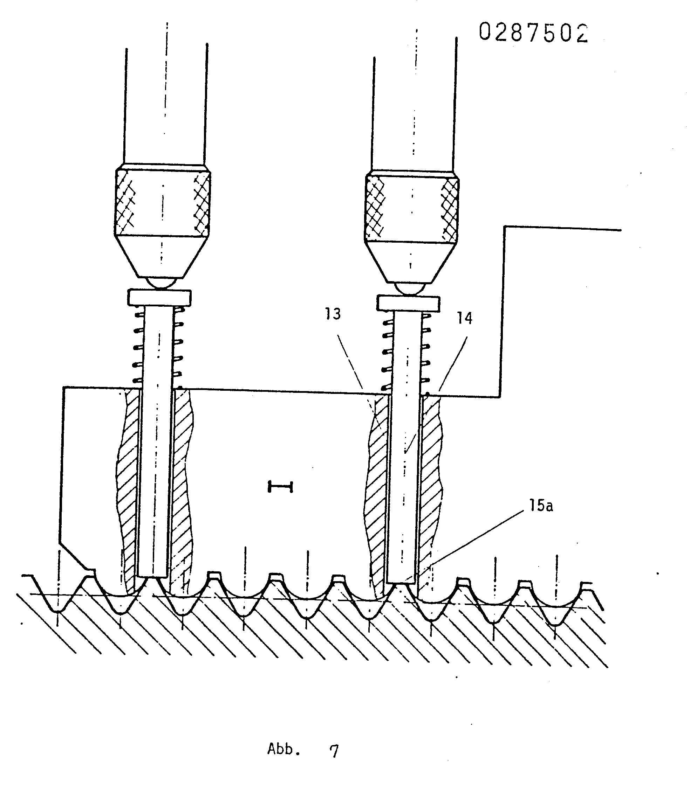

Die Taststifte (14) weisen nach Abb. 7, 8 und 9 an ihren Enden jeweils dem Meßzweck optimal angepaßte geometrische Meßflächen oder -punkte (15a, 15b, 15c) auf.

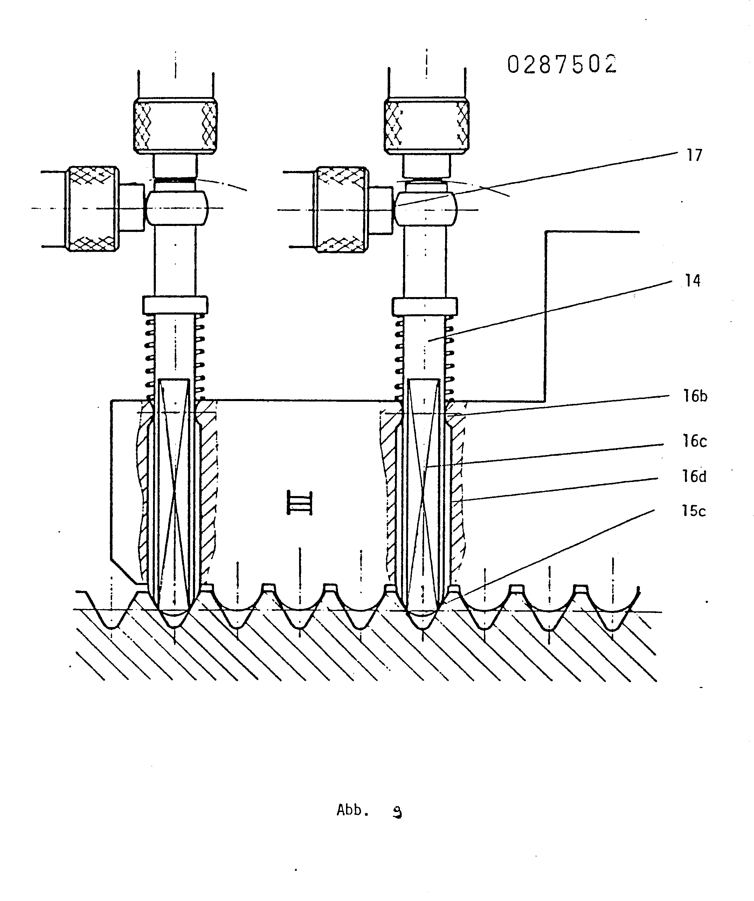

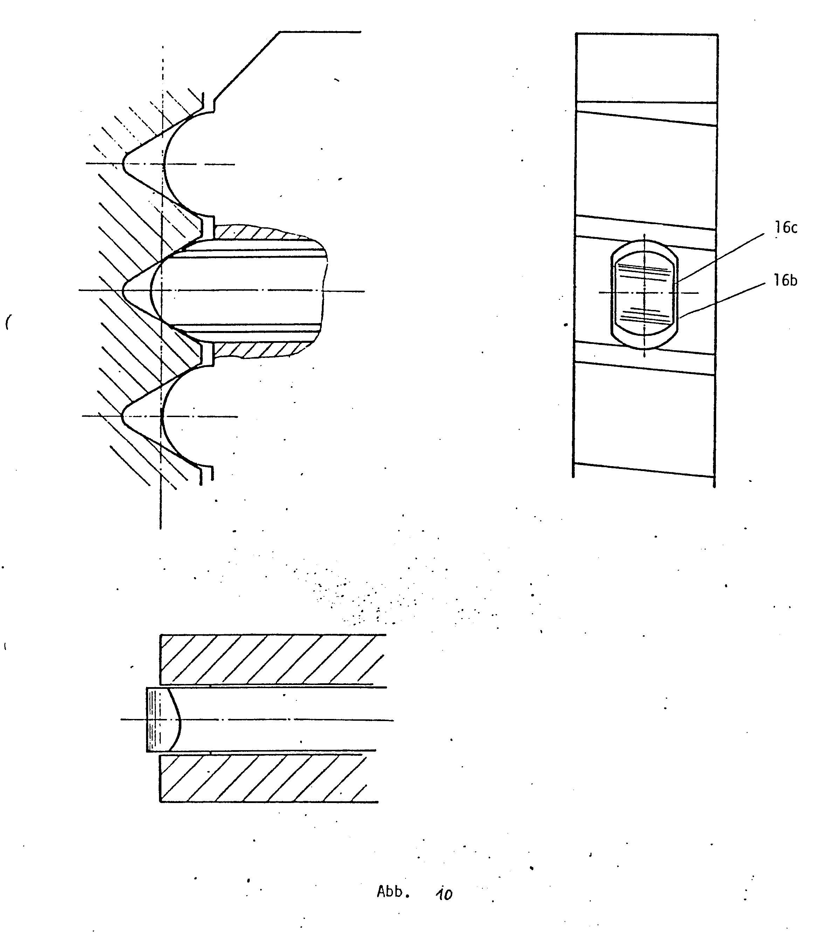

Die Meßwertabnahme erfolgt über übliche mechanische oder elektronische Meßeinrichtungen. Für die Messung des Flankendurchmessers wird bspw. nach Abb. 9 und 10 die Bohrung (13) mit einer Aushöhlung (16d) und einer Führungsöffnung (16b), und der Taststift (14) mit Führungsflächen (16c) versehen, so daß die Bewegung des Taststiftes axial und ausschwenkend (bei Steigungsfehlern) nur in einer Ebene erfolgt und der Vorgang nach Meßanordnung (17) exakt verfolgt werden kann.

Die Führung des Taststiftes (14) zur Messung des Flankendurchmessers (wie auch die für die Messung des anderen Parameter) kann in anderer konstruktiver Ausführung auch außerhalb der Bohrung (13) liegen.

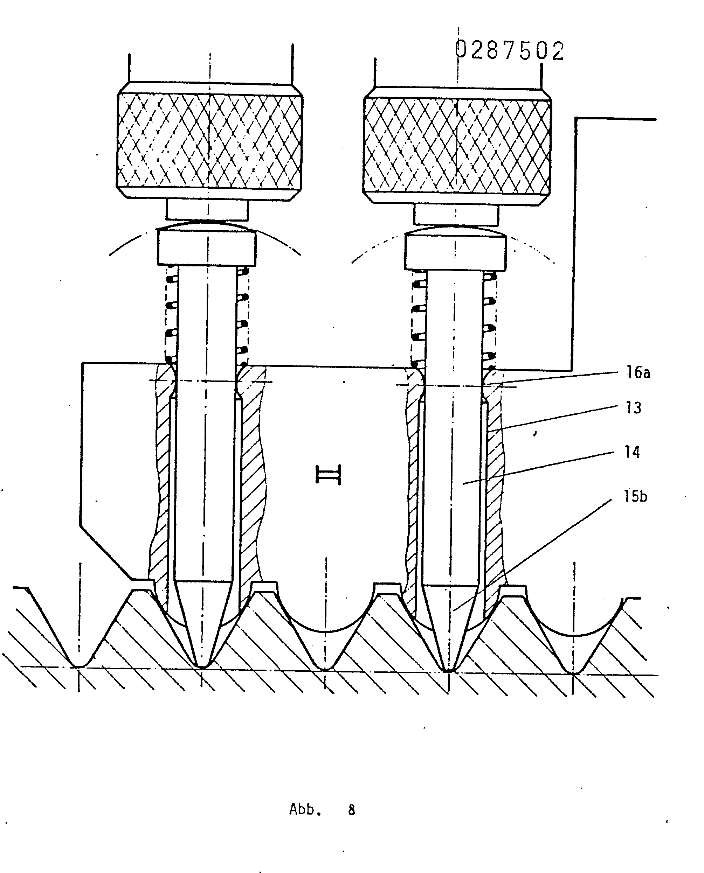

Nach Abb. 8 ist eine Führung (16a) für den Taststift (14) zur Messung des Kerndurchmessers als Beispiel dargestellt, die bei vergrößerter Bohrung (13), ein Ausschwenken des Taststiftes, neben der Axialbewegung, in allen Richtungen gestattet (kreisrunde Punktanage) und wie gezeichnet meßtechnisch abgegriffen wird.

In der Kombination nun lassen sich je nach verfolgtem Zweck, diverse Anordnungen für die messenden Taststifte treffen:

a. Bei einer Dreipunktmessung jeden Parameters wird bspw. in jedem Zentrierelement (6) der Taststift für den Außen-, Kern- und Flankendurchmesser (übereinander angeordnet) untergebracht und bei feststehendem Spannfutter (1) über 9 Meßstellen gemessen.

b. Ebenso bspw. kann aber bei einer Verstellung des Spannfutters (1) um jeweils 120° in der gemeinsamen Achse, in jedem Zentrierelement (6) jeweils auch nur ein einzelner Taststift für den Außen-, Kern- und Flankendurchmesser untergebracht sein, wobei an nur 3 Meßstellen gemessen wird.

c. Je nach Genauigkeitsforderung genügt ggf. auch eine Taststiftanordung nach (b.) ohne Verstellung des Spannfutters, praktisch jeweils in einer Einpunktmessung des jeweiligen Parameters.

d. Die Anordnung nach (c.) wiederum kann durch Verwendung eines Zweibackenfutters auf eine Zweipunktmessung jeden Parameters erhöht und im Prinzip auch über eine Dreipunktmessung hinaus durch Verwendung von Mehrbackenfuttern beliebig erhöht werden.

e. Durch Unterbringung von jeweils zwei höhenversetzten Taststiften im selben Zentrierelement (6) für den Außen-, Kern- und Flankendurchmesser nach Abb. 7, 8 und 9 (I, II und III) bei einer Zwei-, Drei-und/oder Mehrbackenausführung des Spannfutters lassen sich durch geeignete Meßwertabnahmen Winkelabweichungen, konischer Verlauf, Schräglagen, axialer Versatz, Schlagstellen, Gratbildungen usw. am zu messenden Gewinde ermitteln und meßtechnisch erfassen.

f. Neben der Erweiterung der Taststiftanordnung in verschiedener Richtung und Anwendungsweise ist es selbstverständlich, daß einzelne der Taststifte oder alle davon auch in den eigentlichen Spann- und Meßelementen (1) der .oberbegrifflichen Vorrichtung untergebracht sein können.

Nicht dargestellt ist in den Figuren die Ausführung nach Anspruch 2, wobei hiernach anstelle des Gewindelehrringes oder -dornes Gewinderollen oder -backen montiert und justiert sind. Die vorstehend beschriebene Arbeitsweise ist jedoch im wesentlichen die gleiche.

**Patentansprüche**

1. Vorrichtung zum Prüfen und Vermessen von Gewinden und von deren rotationssymmetrischem koaxialen Verlauf in einem Spannvorgang, in der ein Gewindelehrring oder -dorn montiert und justiert ist,
**dadurch gekennzeichnet,**
daß der Gewindelehrring oder -dorn (2) mehrfach segmental geteilt und auf ein Mehrbackenfutter (1) montiert und so justiert ist, daß die Drehachsen exakt ausgerichtet sind und daß Meßmittel vorgesehen und zu den Drehachsen ausrichtbar angeordnet sind, so daß die Lage von Durchmessern, Flächen, Konen, Gewinden und Bohrungen an ein und demselben Drehteil in bezug auf das im Gewindelehrring (2) bzw. auf dem Gewindelehrdorn befindliche Gewinde vermeß- und prüfbar sind.

2. Vorrichtung zum Prüfen und Vermessen von Gewinden und von deren rotationssymmetrischem koaxialen Verlauf in einem Spannvorgang, in der ein Gewindelehrring oder -backen montiert und justiert ist,
**dadurch gekennzeichnet,**
daß der Gewindelehrring oder -backen jeweils segmental auf die Stellglieder des Mehrbackenfutters montiert und so justiert sind, daß die gemeinsame Drehachse exakt ausgerichtet ist, und daß Meßmittel vorhanden sind, so daß die Lage von Durchmessern, Flächen, Konen, Gewinden und Bohrungen an ein und demselben Drehteil in bezug auf das im Gewindelehrring (2) bzw. auf dem Gewindelehrdorn befindliche Gewinde vermeß-und prüfbar sind.

3. Vorrichtung nach Anspruch 1,
**dadurch gekennzeichnet,**
daß der verwendete Gewindelehrring (2) oder -dorn ein "Gutlehrring oder -dorn" mit den Größt- bzw. Kleinstmaßen im Außen-, Flanken- und Kerndurchmesser ist.

4. Vorrichtung nach Anspruch 1,
**dadurch gekennzeichnet,**
daß das Mehrbackenfutter, (1) mit entsprechendem zentralen Durchlaß automatisch, bspw. pneumatisch gespannt und entspannt, und in seiner Drehachse um 360° stufenweise, bspw. von Hand oder über einen Schrittmotor, verstellbar ist.

5. Vorrichtung nach Anspruch 1,
**dadurch gekennzeichnet,**
daß zwischen den Gewindesegmenten auf dem Mehrbackenfutter (1), auf Gewindesollmaß stehende, federnde Zentrierelemente (6) angebracht sind, die dieselbe Gewindesteigung wie das Prüfgewinde aufweisen, in ihren Gewindespitzen jedoch abgerundet sind, so daß der Gewindeprüfling unter leichtem Druck über einen "Ratschffekt" auf die Gewindegänge der beweglichen Gewindesegmente vor dem Spannen ausrichtbar ist.

6. Vorrichtung nach Anspruch 1 und 4,
**dadurch gekennzeichnet,**
daß im Durchlaß das Mehrbackenfutter (1) ein federnder Anschlag angeordnet ist, der auf das Gewicht des Gewindeprüflings eingestellt, die genaue Höhenpositionierung des Drehteils vornimmt, gleichzeitig aber auch als Auswerfemechanik für das Teil nach dem Wiederöffnen der Gewindesegmente dient.

7. Vorrichtung nach Anspruch 1 bis 6,
**dadurch gekennzeichnet,**
daß maßabtastende Meßeinrichtungen und/oder -uhren (mechanisch, optisch, induktiv usw.) feststehend oder ggf. auf Gleitschienen zugeordnet sind, die mit den Spann- und Èntspannungsvorgängen des Mehrbackenfutters synchron, d.h. rückstellend oder anstellend laufen, damit bei automatischer Bestückung mit den Gewindeprüflingen und beim Auswerfen der Spannbereich frei ist.

8. Vorrichtung nach Anspruch 4,
**dadurch gekennzeichnet,**
daß die Zentrierelemente (6) mit ihren ratschenartig ausgebildeten, aber auf Gewindesollmaß stehenden Gewindegängen (7) mit Bohrungen (13) versehen sind, die bewegliche Taststifte (14) aufnehmen.

9. Vorrichtung nach Anspruch 8,
**dadurch gekennzeichnet,**
daß die beweglichen Taststifte (14) federnd angeordnet sind.

10. Vorrichtung nach Anspruch 8 und 9,
**dadurch gekennzeichnet,**
daß die Taststifte (14) an ihren Meßkuppen (15a, 15b, 15c) jeweils geometrische Formen aufweisen, die der optimalen Erfassung des zu messenden Außen-, Kern- und Flankendurchmessers eines Gewindes entsprechen.

11. Vorrichtung nach Anspruch 8,
**dadurch gekennzeichnet,**
daß die Bohrungen (13) für die Führung der Taststifte (14) mit Führungsflächen, -kuppen und/oder -aushöhlungen (16a, 16b, 16c, 16d) versehen sind, die das Ausschwenken der Taststifte (14) neben der Axialbewegung in beliebiger oder nur in einer zusätzlichen Ebene gestatten.

12. Vorrichtung nach Anspruch 8 und 11,
**dadurch gekennzeichnet,**
daß die Führungsflächen und/oder Führungskuppen am Taststift (14) selbst oder mit mechanischen Gegenanschlägen außerhalb der Bohrung (13) liegen.

13. Vorrichtung nach Anspruch 8 und 12,
**dadurch gekennzeichnet,**
daß die Bohrungen (13) in den Zentrierelementen (6) übereinander so angeordnet sind, daß über den Umfang des zu messenden Gewindes jeweils gleichzeitig eine Mehrpunktmessung des Außen-, Kern- und Flankendurchmessers vorgenommen wird.

14. Vorrichtung nach Anspruch 8 bis 13,
**dadurch gekennzeichnet,**
daß die Bohrungen (13) in den Zentrierelementen (6) jeweils einzeln für die Messung des Außen-, Kern- und Flankendurchmessers (z.B. 3X um 120° versetzt) angeordnet sind, und die Mehrpunktmessung durch entsprechende Verstellung des Mehrbackenfutters (1) um die eigene Achse erfolgt.

15. Vorrichtung nach Anspruch 8 bis 14,

**dadurch gekennzeichnet,**
daß in der Anordnung für die Messung des Außen-, Kern-und Flankendurchmessers axial ausgerichtet eine oder mehrere Bohrungen hinzukommen, um durch Messung in verschiedener Höhe des zu messenden Gewindes bzw. innerhalb verschiedener Gewindegänge desselben, Konizitäten, Schrägstellungen, Schlagschäden usw. zu messen.

16. Vorrichtung nach Anspruch 8 bis 15, **dadurch gekennzeichnet,**
daß die Bohrungen (13) und Taststifte (14) wahlweise alle oder einzelne davon für das Messen des Außen-, Kern- und Flankendurchmessers in den Segmenten des Gewindelehrringes (2) untergebracht sind.

0287502

4c

4b

4a

4

1

2

2a

3

Abb. 1

0287502

Abb. 2

0287502

Abb. 3

0287502

Abb. 4

$$a = \sqrt{c^2 - b^2}$$

$$x = 100 - a$$

| Y | 0,5 | 0,75 | 1 | |
|---|---|---|---|---|
| X | 0,00126 | 0,00282 | 0,0050 | |

Abb. 5

0287502

Abb. 6

0287502

Abb.   7

0287502

16a
13
14
15b

Abb. 8

0287502

17

14

16b

16c

16d

15c

Abb. 9

0287502

16c

16b

Abb. 10

## EINSCHLÄGIGE DOKUMENTE

EP 88730062.2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US - A - 1 464 938 (JORDAN)<br>* Gesamt *<br><br>-- | | G 01 B 5/16 |
| A | US - A - 2 496 212 (HOLT)<br>* Gesamt *<br><br>-- | | |
| A | US - A - 3 477 136 (JOHNSON)<br>* Gesamt *<br><br>-- | | |
| A | DE - A1 - 3 222 583 (MAUSER)<br>* Gesamt *<br><br>-- | | |
| A | GB - A - 584 925 (WARREN)<br>* Gesamt *<br><br>-- | | RECHERCHIERTE SACHGEBIETE (Int. Cl.4) |
| A | CH - A - 229 635 (MÜLLER)<br>* Gesamt *<br><br>---- | | G 01 B 3/00<br>G 01 B 5/00<br>G 01 B 7/00<br>G 01 B 21/00<br>B 23 B 25/00 |

Der vorliegende Recherchenbericht wurde für alle Patentansprüche erstellt.

| Recherchenort | Abschlußdatum der Recherche | Prüfer |
|---|---|---|
| WIEN | 22-06-1988 | TOMASELLI |

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82